# DEMANDE DE BREVET EUROPEEN

(11) **EP 1 103 392 A1**
(43) Date de publication de la demande: **30.05.2001**
(21) Numéro de dépôt: 00403213.2
(22) Date de dépôt: 17.11.2000
(51) Int. Cl.: B60D 5/00, B61D 17/22

(54) **Conduit souple de liaison**

(30) Priorité: 26.11.1999 FR 9914924
(71) Demandeur: FAIVELEY TRANSPORT, 93200 Saint-Denis (FR)
(72) Inventeur: Mauberger, Thierry Pierre, 37300 Joue les Tours (FR)
(74) Mandataire: Keib, Gérard

(57) **Abrégé**

L'invention se rapporte à un procédé de réalisation d'un conduit souple (1) dont les dimensions et la forme sont aisément modulables en fonction de son utilisation.

Le procédé de réalisation du conduit souple déformable comprend notamment les étapes suivantes :
- on réalise des éléments allongés (2) en un matériau souple élastique, dont la section présente au moins une onde, et s'étendant rectilignes longitudinalement, chaque élément allongé (2) étant rendu solidaire d'au moins un élément allongé de maintien (3) en matière rigide et pliable de façon à garder sa forme après pliage,
- on assemble les uns aux autres plusieurs ensembles ainsi réalisés le long de leurs bords longitudinaux adjacents pour former une enveloppe plane (18) dont les dimensions correspondent à celles du conduit souple déployé,
- on déforme l'enveloppe plane (18) de façon à la fermer et à obtenir la forme souhaitée de la section du conduit, l'enveloppe (18) étant maintenue en forme par la déformation des éléments allongés de maintien (3).

## Description

L'invention se rapporte à un procédé de réalisation d'un conduit souple de liaison et au conduit souple ainsi obtenu.

Plus particulièrement, l'invention se rapporte à un procédé de réalisation d'un conduit souple dont les dimensions et la forme sont aisément modulables en fonction de son utilisation.

De tels conduits souples sont, par exemple, utilisés comme couloir d'intercirculation entre deux véhicules ferroviaires ou routiers.

On connaît déjà des couloirs d'intercirculation entre deux véhicules.

Le document FR-B- 2 751 191 décrit un soufflet d'intercirculation présentant une pluralité de modules assemblés entre eux par des vis. Chaque module est en matériau à base de caoutchouc, comportant au moins deux régions ondulées assemblées entre elles par vulcanisation. Par ailleurs, les modules comportent des éléments de renfort, tels que des joncs en verres époxy insérés aux extrémités des ondes.

Ce type de soufflet d'intercirculation présente toutefois l'inconvénient d'un montage long à mettre en oeuvre, nécessitant notamment une vulcanisation des éléments entre eux. De plus, ce dispositif ne permet pas de modifier facilement la forme de la section du soufflet.

L'invention vise à remédier à ces inconvénients en réalisant un conduit souple modulable, léger, dont le montage est rapide et facile, et dont la forme de la section peut être adaptée à de nombreuses configurations différentes.

A cet effet, un premier objet de l'invention concerne un procédé de réalisation d'un conduit souple déformable comportant les étapes suivantes:
- on réalise des éléments allongés en un matériau souple élastique, dont la section présente au moins une onde, et s'étendant rectilignes longitudinalement,
- on réalise des éléments allongés de maintien en matière rigide et pliable de façon à garder leur forme après pliage,
- on découpe chaque élément allongé et chaque élément allongé de maintien suivant une même longueur correspondant au périmètre du conduit que l'on veut réaliser,
- chaque élément allongé est rendu solidaire d'au moins un élément allongé de maintien,
- on assemble les uns aux autres plusieurs ensembles ainsi réalisés le long de leurs bords longitudinaux adjacents pour former une enveloppe plane dont les dimensions correspondent à celles du conduit souple déployé,
- on déforme l'enveloppe plane de façon à la fermer et à obtenir la forme souhaitée de la section du conduit, l'enveloppe étant maintenue en forme par la déformation des éléments allongés de maintien,
- on assemble les extrémités adjacentes de l'enveloppe mise en forme.

Un deuxième objet de l'invention concerne un conduit souple obtenu par ledit procédé de réalisation.

Dans un mode de réalisation du conduit souple, l'élément allongé de maintien est un profilé assemblé au bord longitudinal de l'élément souple par coopération de formes.

D'autres particularités et avantages de l'invention apparaîtront encore dans la description ci-après.

Aux dessins annexés donnés à titre d'exemples non limitatifs:
- la figure 1 représente une vue en perspective d'un élément de maintien selon un mode de réalisation de l'invention, mis en forme pour recevoir l'élément allongé souple ;
- la figure 2 représente une vue en perspective de l'élément de maintien de la figure 1, mis en forme pour bloquer l'élément allongé souple ;
- la figure 3 est une vue en perspective de l'élément allongé souple selon l'invention ;
- les figures 4a, 4b et 4c représentent les étapes d'insertion des éléments allongés souples dans les éléments de maintien ;
- la figure 5 représente une vue en perspective d'un élément allongé sur lequel deux éléments de maintien sont fixés ;
- la figure 6 représente une vue en perspective de plusieurs éléments allongés assemblés par des éléments de maintien ;
- la figure 7 représente le conduit souple obtenu conformément à un mode de réalisation selon l'invention.

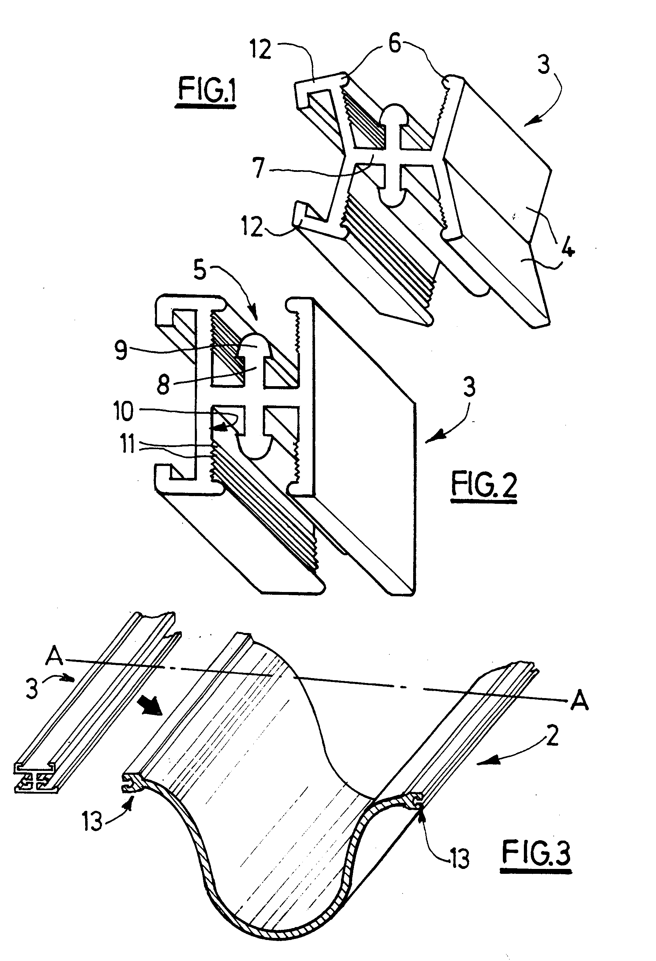

Les différents éléments constituant le conduit souple sont d'abord décrits en référence aux figures 1 à 4.

Le conduit souple 1 comprend une pluralité d'éléments allongés souples 2 assemblés entre eux.

Ces éléments allongés souples 2 sont en un matériau souple et élastique tel qu'un polymère par exemple, afin de pouvoir subir des déformations en tension et contrainte et résister aux phénomènes de dégradation par fatigue du matériau.

Dans un mode de réalisation, ces éléments allongés souples 2 sont en caoutchouc.

Dans un autre mode de réalisation, ces éléments 2 peuvent être renforcés par une toile résistante, ceci afin d'améliorer les propriétés de maintien de ces éléments et leur résistance aux dégradations.

Des éléments de maintien 3 sont fixés sur les éléments allongés souples 2 suivant la direction longitudinale de ces derniers. Ces éléments de maintien sont destinés à maintenir en forme les éléments souples.

Les éléments de maintien 3 sont en matière rigide et pliable de façon à garder leur forme après pliage tout en conservant de bonnes propriétés de résistance mécanique. Il s'agit par exemple d'un métal.

La structure d'un élément de maintien 3, selon un mode de réalisation de l'invention, est maintenant décrit en détail en référence aux figures 1 et 2.

L'élément de maintien 3 est un profilé, assemblé sur les bords longitudinaux de l'élément allongé souple 2 par coopération de formes, et de même longueur que l'élément allongé souple.

Le profilé 3 présente une section générale en H, comportant quatre ailes 4.

La section en H définit ainsi deux évidements 5, opposés l'un à l'autre, et formés chacun par deux ailes 4 du H en vis à vis.

Le premier évidement 5 du profilé reçoit le bord longitudinal d'un élément allongé souple 2, le second évidement 5 recevant le bord longitudinal d'un autre élément allongé souple 2.

Chaque aile 4 du profilé présente à son extrémité libre une protubérance 6 dirigée vers l'aile opposée en vis à vis.

Chaque évidement 5 présente sur sa paroi 7 formant le fond, une surface saillante 8, solidaire de la paroi de fond 7 et sensiblement perpendiculaire à celle-ci.

La surface saillante 8 s'étend dans l'évidement suivant la direction longitudinale du profilé sur toute la longueur de ce dernier.

L'extrémité libre de cette surface saillante 8 présente une protubérance 9. Cette dernière est destinée à venir s'encliqueter dans une forme complémentaire de l'élément souple 2.

Les faces internes 10 des ailes 4 du profilé comportent des surfaces saillantes 11 pointues dont la pointe est dirigée vers la paroi de fond 7 de chaque évidement.

Ces surfaces saillantes 11 s'étendent dans la direction de l'axe longitudinal du profilé 3 sur toute la longueur de celui-ci. La face interne 10 d'une aile 4 comprend une pluralité de surfaces saillantes 11 parallèles entre elles, formant ainsi une zone de rugosité de la face interne 10.

Ces surfaces saillantes 11 sont destinées à rendre rugueuse les parois internes des ailes 4 du profilé, de manière à accrocher la matière souple de l'élément 2 en contact.

Les protubérances 6, ainsi que les surfaces saillantes 8 surmontées d'une protubérance 9, et les surfaces saillantes 11, permettent d'assurer la fixation du profilé 3 sur les éléments souples 2.

Afin de faciliter l'introduction de l'élément souple dans l'évidement 5, les ailes 4 correspondantes peuvent être écartées l'une de l'autre, tel que représenté sur la figure 1.

Une fois l'élément souple 2 mis en place, les ailes 4 sont resserrées, de sorte à être sensiblement parallèles, tel que représenté sur la figure 2.

Le profilé 3 comporte au moins des protubérances 6 aux extrémités de ses ailes 4 afin de maintenir l'élément souple en place.

Dans d'autres modes de réalisation du profilé, les surfaces saillantes 8 et/ou 11 ne s'étendent que sur une partie de la longueur du profilé.

Deux ailes 4 formant un côté du profilé comportent à leur extrémité libre des surfaces 12, perpendiculaires aux ailes 4, saillant dans la direction opposé des protubérances 6.

Les extrémités libres des surfaces 12 sont coudées et dirigées l'une vers l'autre, de sorte qu'il est possible de faire coulisser un objet, tel qu'une baguette ou une roulette, entre ces parties coudées et les ailes 4.

Ces surfaces 12 peuvent également permettre de fixer divers accessoires.

Les profilés 3 d'extrémité placés sur les éléments souples 2 en bordure du conduit souple, présentent une section en forme de U (non représenté). La structure de ce profilé étant identique à celle d'un profilé en H pour lequel deux ailes 4 en vis à vis ont été supprimées.

Le fond de ces profilés peut comporter une surface saillant, suivant la direction de ce fond, d'un côté d'une (ou des) aile(s) du U, permettant de fixer le profilé sur un support.

Dans d'autres modes de réalisation non représentés, l'élément de maintien 3 peut être une simple tige de section quelconque, adhérisée à l'élément 2, par collage par exemple, ou par tout autre moyen connu.

On peut également envisager que plusieurs éléments de maintien 3 sont fixés à intervalles réguliers sur un élément souple 2, sur une majeure partie de la longueur de ce dernier.

La structure d'un élément souple 2, selon un mode de réalisation de l'invention, est maintenant décrit en détail en référence à la figure 3.

L'élément souple 2 présente une section comportant une onde.

Cette onde permet à l'élément 2 d'accepter des déformations importantes suivant un axe perpendiculaire à sa direction longitudinale.

Les éléments de maintien 3 sont fixés sur les bords longitudinaux 13 de l'élément 2 par coopération de formes.

La forme des bords longitudinaux 13 de l'élément 2 représentés sur la figure 3 est complémentaire de la forme de l'élément de maintien 3, représenté sur les figures 1 et 2.

Chaque bord longitudinal 13 comporte une partie élargie 14, prolongée par une partie rétrécie 15.

La partie élargie 14 est destinée à être engagée dans l'évidement 4 du profilé 3 décrit précédemment.

La protubérance 6 des extrémités des ailes du profilé 3 étant engagée sur l'épaulement qui réalise la transition entre les parties élargies et rétrécies.

La partie élargie 14 du bord longitudinal de chaque élément souple présente une forme complémentaire de la forme de l'évidement 5 du profilé 3.

La partie 14 comporte ainsi une cavité 16 de forme complémentaire de la surface saillante 8, dont l'extrémité présente une protubérance 9, de l'évidement 5 du profilé.

Des surfaces saillantes 17 sont disposées au bord de la partie rétrécie 15, du côté opposé à la partie élargie, sensiblement perpendiculaires à la surface externe de l'élément souple 2.

Les surfaces 17 sont ainsi en appui sur les extrémités libres des ailes 4 d'un profilé 3.

D'autres modes de réalisation, non représentés, de l'élément souple 2 peuvent être envisagés.

Notamment, la section de l'élément 2 peut comporter une pluralité d'ondes.

Les éléments de maintien 3 ne présentant pas une structure de profilé peuvent être fixés à un endroit quelconque entre les bords longitudinaux 13 de l'élément 2. La fixation peut être réalisée par coopération de formes ou adhérisation, tel que collage par exemple.

Le procédé de montage du conduit est maintenant décrit en référence aux figures 3 à 6.

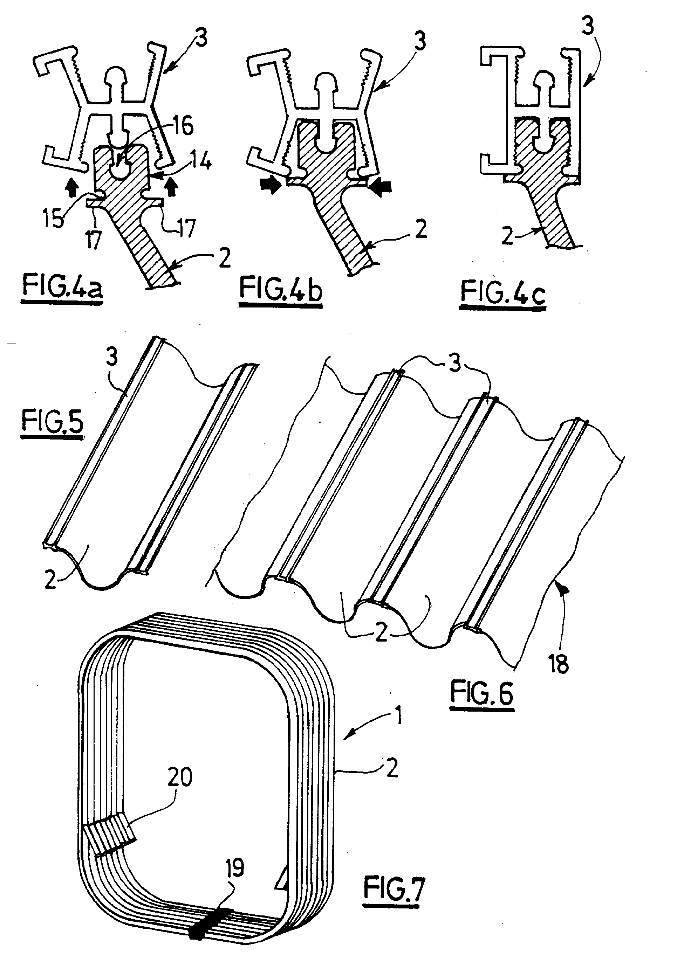

Le procédé de montage du conduit souple comprend les étapes suivantes:
- on réalise d'abord des éléments allongés 2 en un matériau souple élastique s'étendant rectilignes longitudinalement, et des éléments allongés de maintien 3 en matière rigide et pliable de façon à garder leur forme après pliage,
- on découpe chaque élément allongé 2 et chaque un élément de maintien 3 suivant une même longueur correspondant au périmètre du conduit 1 que l'on veut réaliser ; cette étape est figurée par la ligne A de la figure 3 ;
- les éléments allongés 2 sont ensuite rendus solidaires d'au moins un élément allongé de maintien 3 en matière rigide et pliable de façon à garder sa forme après pliage, cette étape est représentée par une flèche sur la figure 3 et l'ensemble élément allongé 2 / élément allongé de maintien 3 est représenté sur la figure 5 ;
- on assemble les uns aux autres plusieurs éléments allongés 2 solidaires d'un élément de maintien 3, le long de leurs bords longitudinaux adjacents pour former une enveloppe plane (18) dont les dimensions correspondent à celles du conduit souple déployé, tel que représenté sur la figure 6;
- on déforme l'enveloppe plane de façon à la fermer et à obtenir la forme souhaitée de la section du conduit, l'enveloppe étant maintenue en forme par les éléments de maintien 3, tel que représenté sur la figure 7.

Dans un autre mode de réalisation, les éléments 2 et 3 peuvent être découpés après solidarisation.

Selon un mode de réalisation de l'invention, les éléments de maintien 3 sont les profilés décrits précédemment.

Les bords longitudinaux des éléments souples sont insérés dans les évidements des profilés 3, tel que représenté par des flèches sur la figure 3, suivant les étapes représentées sur les figures 4a, 4b et 4c.

A cet effet, les ailes 4 formant les évidements 5 sont écartées les unes des autres de manière à faciliter l'introduction de la partie élargie 14 de l'élément souple 2 (figure 4a).

Ce dernier est alors introduit dans l'évidement 5, sa cavité 16 venant s'encliqueter sur la surface saillante 8 de l'évidement (figure 4b).

Les ailes 4 sont alors resserrées sur la partie élargie 14, de sorte que les ailes 4 soient parallèles entre elles. Les surfaces saillantes pointues 11 viennent alors agripper la partie élargie de l'élément souple (figure 4c).

Le nombre désiré d'éléments souples 2 est ainsi assemblé, formant une enveloppe plane 18 comportant des ondes, tel que représenté sur la figure 6.

Les profilés 3 sont alors mis en forme, par exemple par cintrage, de manière à fermer l'enveloppe 18.

Les extrémités de l'enveloppe 18 sont alors assemblées par un élément de liaison étanche 19, afin de former un conduit souple, tel que représenté sur la figure 7.

Dans un autre mode de réalisation, l'assemblage est réalisé par collage, couture, ou au moyen d'un profilé.

Les profilés fixés sur les extrémités du conduit souple permettent de fixer ce dernier sur des supports, tandis que les profilés reliant deux éléments souples permettent de fixer des accessoires à l'intérieur ou à l'extérieur du conduit.

Ce type de conduit peut être utilisé comme couloir d'intercirculation entre deux véhicules ferroviaires ou routiers.

Les matériaux utilisés doivent alors suivre les normes de résistance au feu, et d'émission de fumée.

Les bavettes 20 venant en contact avec un plancher peuvent alors être fixées sur les profilés, ainsi que d'autres accessoires, tels que paravents latéraux, plafond, poignées, éclairage,...

Dans d'autres modes de réalisation non représentés, les éléments souples 2 peuvent être assemblés par collage, couture, vis .... La mise en forme des éléments étant alors effectuée par les éléments de maintien 3, sous forme de tiges par exemple.

Le conduit souple selon l'invention peut également être utilisé pour des conduits d'aération, d'évacuation des fumées, ....

Le procédé de réalisation selon l'invention permet d'obtenir un conduit dont la forme et les dimensions sont modulables à volonté.

La section du conduit peut, par exemple, être polygonale afin de s'adapter aux contours des formes complexes.

Le conduit comportant un faible nombre de pièces peut être assemblé rapidement et facilement, avec un nombre réduit d'outils.

Bien entendu, l'invention n'est pas limitée aux exemples de réalisation que l'on vient de décrire. Ainsi, on peut concevoir d'autres modes de fixation des profilés aux éléments en caoutchouc.

## Revendications

1. Procédé de réalisation d'un conduit souple déformable (1) caractérisé par les étapes suivantes:
- on réalise des éléments allongés (2) en un matériau souple élastique, dont la section présente au moins une onde, et s'étendant rectilignes longitudinalement,
- on réalise des éléments allongés de maintien (3) en matière rigide et pliable de façon à garder leur forme après pliage,
- on découpe chaque élément allongé (2) et chaque élément allongé de maintien (3) suivant une même longueur correspondant au périmètre du conduit que l'on veut réaliser,
- chaque élément allongé (2) est rendu solidaire d'au moins un élément allongé de maintien (3),
- on assemble les uns aux autres plusieurs ensembles ainsi réalisés le long de leurs bords longitudinaux adjacents pour former une enveloppe plane (18) dont les dimensions correspondent à celles du conduit souple (1) déployé,
- on déforme l'enveloppe plane (18) de façon à la fermer et à obtenir la forme souhaitée de la section du conduit (1), l'enveloppe (18) étant maintenue en forme par la déformation des éléments allongés de maintien (3),
- on assemble les extrémités adjacentes de l'enveloppe (18) mise en forme.

2. Conduit souple obtenu selon le procédé de la revendication 1, caractérisé en ce que l'élément allongé de maintien est un profilé (3) assemblé au bord longitudinal de l'élément allongé souple (2) par coopération de formes.

3. Conduit souple selon la revendication 2, caractérisé en ce que le profilé (3) présente une section générale en H, ladite section définissant deux évidements (5) opposés l'un à l'autre formés par les ailes (4) du H, et recevant chacun un bord d'un élément allongé souple (2).

4. Conduit souple selon la revendication 3, caractérisé en ce que chaque aile (4) du profilé (3) présente à son extrémité libre une protubérance (6) dirigée vers l'aile (4) opposée en vis à vis.

5. Conduit souple selon l'une quelconque des revendications 2 à 4, caractérisé en ce que chaque évidement (5) présente sur sa paroi (7) formant le fond une surface saillante (8), solidaire de la paroi de fond (7) et sensiblement perpendiculaire à celle-ci, dont l'extrémité libre présente une protubérance (9).

6. Conduit souple selon l'une quelconque des revendications 2 à 5, caractérisé en ce que le les parois internes (10) des ailes (4) du profilé (3) comportent des surfaces saillantes pointues (11) dont la pointe est dirigée vers la paroi de fond (7) de chaque évidement (5).

7. Conduit souple selon l'une quelconque des revendications 2 à 6, caractérisé en ce que les bords longitudinaux (13) de chaque élément allongé souple (2) comportent une partie élargie (14), destinée à être engagée dans l'évidement (5), prolongée par une partie rétrécie (15), la protubérance (6) des extrémités des ailes (4) du profilé (3) étant engagée sur l'épaulement qui réalise la transition entre les parties élargies (14) et rétrécies (15).

8. Conduit souple selon l'une quelconque des revendications 2 à 7, caractérisé en ce que les ailes (4) du profilé sont resserrées sur la partie élargie (14) de l'élément allongé souple (2) afin de le maintenir dans l'évidement (5).

9. Conduit souple selon l'une quelconque des revendications 2 à 8, caractérisé en ce que la partie élargie (14) du bord longitudinal de chaque élément allongé souple (2) présente une forme complémentaire de la forme de l'évidement (5) du profilé (3).

10. Conduit souple conforme aux revendications 2 à 9, caractérisé en ce qu'il constitue un couloir d'intercirculation de deux véhicules ferroviaires ou routiers.
